# EUROPEAN PATENT APPLICATION

(11) **EP 4 579 930 A1**
(43) Date of publication of application: **02.07.2025**
(21) Application number: 23902218.9
(22) Date of filing: 15.09.2023
(51) Int. Cl.: H01M 50/531, H01M 50/533, H01M 50/543, H01M 50/103, H01M 50/586, H01M 50/593

(54) **BATTERY AND BATTERY PACK**

(30) Priority: 12.12.2022 CN 202211587759
(71) Applicant: Ningde Amperex Technology Limited, Ningde, Fujian 352100 (CN)
(72) Inventor: LIU, Ning, Ningde, Fujian 352100 (CN); WU, Hua, Ningde, Fujian 352100 (CN)
(74) Representative: Icosa
(86) International application number: PCT/CN2023/119208
(87) International publication number: WO 2024/125013

(57) **Abstract**

This application discloses a battery and a battery pack. The battery includes a housing, a battery post, a battery cell, and an adapter. The housing includes a first side plate. The battery post is mounted to the first side plate. The battery cell is accommodated in the housing. The battery cell includes a battery cell body and a first tab, where the first tab extends from an end of the battery cell body facing the first side plate. The adapter includes a first connecting portion, a first bending portion, a second connecting portion, a second bending portion, and a third connecting portion. The first connecting portion is connected to the first tab, and the first bending portion connects the first connecting portion and the second connecting portion. A projection of the first connecting portion on the first side plate does not overlap with a projection of the second connecting portion on the first side plate, and the first connecting portion is closer to the first side plate than the second connecting portion. The third connecting portion is located between the second connecting portion and the first side plate, the second bending portion connects the second connecting portion and the third connecting portion, and the third connecting portion is connected to the first side plate or to the battery post.

## Description

### CROSS-REFERENCE TO RELATED APPLICATIONS

This application claims priority to Chinese patent application (202211587759.5), filed on December 12, 2022 and entitled "BATTERY AND BATTERY PACK", which is incorporated herein by reference in its entirety.

### TECHNICAL FIELD

This application relates to the field of batteries, and in particular to a battery and a battery pack.

### BACKGROUND

Rechargeable batteries are batteries that can be charged after being discharged to activate the active substances for continuous use. Rechargeable batteries are widely used in electronic devices, such as cell phones and laptops. How the safety of batteries is improved has always been a research direction in the industry.

### SUMMARY

This application provides a battery and a battery pack, which can improve the utilization of the internal space of the battery and reduce safety risks.

According to a first aspect, this application provides a battery including a housing, a battery post, a battery cell, and an adapter. The housing includes a first side plate, the battery post is mounted to the first side plate, and the battery cell is accommodated in the housing. The battery cell includes a battery cell body and a first tab, where the first tab extends from an end of the battery cell body facing the first side plate. The adapter includes a first connecting portion, a first bending portion, a second connecting portion, a second bending portion, and a third connecting portion. The first connecting portion is connected to the first tab, and the first bending portion connects the first connecting portion and the second connecting portion. A projection of the first connecting portion on the first side plate does not overlap with a projection of the second connecting portion on the first side plate. The third connecting portion is located between the second connecting portion and the first side plate, the second bending portion connects the second connecting portion and the third connecting portion, and the third connecting portion is connected to the first side plate or to the battery post.

Under the condition that the battery is subjected to an external shock, the battery cell may be shaken inside the housing, which causes a joint between the first connecting portion and the first tab and a joint between the third connecting portion and the battery post (or a joint between the third connecting portion and the first side plate) to be pulled. The first bending portion and the second bending portion may release stress through deformation, thereby providing buffering, reducing the stress at the joint between the first connecting portion and the first tab and the joint between the third connecting portion and the battery post, reducing the risk of failure of the joint between the first connecting portion and the first tab and the joint between the third connecting portion and the battery post, and improving the safety of the battery. The first connecting portion is bent toward the first side plate with respect to the second connecting portion to reduce a distance between the first connecting portion and the first side plate and to provide more folding space for the first tab, improving the utilization of the internal space of the battery and the energy density of the battery.

In some embodiments, the third connecting portion is connected to the battery post, and a surface of the first connecting portion facing the first side plate is closer to the first side plate than a surface of the third connecting portion facing the first side plate, which can further reduce the distance between the first connecting portion and the first side plate and provide more folding space for the first tab.

In some embodiments, a portion of the first tab is disposed between the first connecting portion and the first side plate and is connected to the first connecting portion.

The first tab may utilize the space between the first connecting portion and the first side plate, so as to further increase the space utilization and improve the energy density of the battery. The first connecting portion may support the first tab, reducing the risk of tearing the first tab under the condition that the battery is subjected to an external shock, and improving the cycle life of the battery.

In some embodiments, an insulating strip is affixed to a surface of the first connecting portion facing the battery cell body. The insulating strip may insulate and isolate the first connecting portion from the battery cell body, so as to reduce the possibility of the first connecting portion being in contact with the battery cell body under the condition that the battery is subjected to an external shock, to reduce the risk of the first connecting portion connecting the positive and negative electrodes of the battery cell body, and to improve safety.

In some embodiments, the second bending portion is provided with a weakening structure. With the weakening structure provided on the second bending portion, the strength of the second bending portion can be reduced, making the second bending portion easier to be bent to shape. Under the condition that the battery is subjected to an external impact, the second bending portion is more likely to release stress through elastic deformation.

In some embodiments, the weakening structure includes at least one of a hole, a slot, and a notch.

In some embodiments, the battery cell body and the first side plate are arranged along a first direction, and the projection of the first connecting portion on the first side plate and the projection of the second connecting portion on the first side plate are arranged along a second direction. The housing includes a shell and a cover plate, where the shell has an opening at one end in a third direction, and the cover plate is connected to the first side plate and covers the opening. The first direction, the second direction, and the third direction are perpendicular to each other.

In some embodiments, the second bending portion connects an end of the second connecting portion close to the cover plate and an end of the third connecting portion close to the cover plate. The second bending portion may be bent to shape after the third connecting portion is connected to the battery post, which may simplify the battery assembly process.

In some embodiments, in the third direction, a size of the battery cell is H, a maximum size of the adapter is h, and h and H satisfy 1 mm≤h≤H-0.3 mm. With the value of h being limited to the range of 1 mm≤h≤H-0.3 mm, the current flow capability of the adapter can be improved and the risk of interference between the adapter and the cover plate can be reduced.

In some embodiments, the first bending portion is bent toward the battery cell body with respect to the first connecting portion, and an angle at which the first bending portion is bent with respect to the first connecting portion is θ, where 0°<θ≤45°. With θ being limited to 0°<θ≤45°, the risks of contact and connection between the first connecting portion and the first side plate can be reduced.

According to a second aspect, an embodiment of this application provides a battery pack, where the battery pack includes a plurality of batteries according to any one embodiment of the first aspect.

### BRIEF DESCRIPTION OF DRAWINGS

To describe the technical solutions in some embodiments of this application more clearly, the following briefly describes the accompanying drawings required for describing some embodiments of this application. Apparently, the accompanying drawings in the following description show merely some embodiments of this application.
FIG. 1 is a schematic exploded view of a battery according to some embodiments of this application;
FIG. 2 shows a schematic top view of a battery according to some embodiments of this application, with a cover plate being excluded;
FIG. 3 is an enlarged schematic view at block A in FIG. 2;
FIG. 4 is a schematic diagram of a structure of an adapter of a battery according to some embodiments of this application;
FIG. 5 is a schematic diagram of the adapter shown in FIG. 4 viewed in a first direction;
FIG. 6 is a schematic diagram of the adapter shown in FIG. 4 viewed in a third direction;
FIG. 7 is a schematic diagram of the structure of the adapter shown in FIG. 4 in an unfolded state;
FIG. 8 is an enlarged schematic diagram at block B in FIG. 2; and
FIG. 9 is a schematic diagram of a structure of a battery pack according to some embodiments of this application.

Reference signs in the specific embodiments are described as follows:
1000. battery;
1. housing; 11. shell; 111. first side plate; 11a. opening; 12. cover plate;
2. battery post;
3. battery cell; 31. battery cell body; 32. first tab; 33. second tab;
4. adapter; 41. first connecting portion; 42. first bending portion; 43. second connecting portion; 44. second bending portion; 441. weakening structure; 45. third connecting portion;
5. insulating strip;
X. first direction; Y. second direction; and Z. third direction.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application.

In the specification, claims, or accompanying drawings of this application, the terms "first", "second", and the like are intended to distinguish between different objects rather than to indicate a particular order or relative importance. In some embodiments of this application, like reference signs denote like components, and for brevity, in different embodiments, detailed descriptions of like components are not repeated.

Reference to "embodiment" in this application means that specific features, structures, or characteristics described with reference to some embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", and the like should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "parallel" in some embodiments of this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering. For example, two directions may be considered to be perpendicular if an included angle between the two directions is 80°-90°, and two directions may be considered to be parallel if the included angle between the two directions is 0°-10°.

The battery and battery pack of this application are described below with reference to the accompanying drawings.

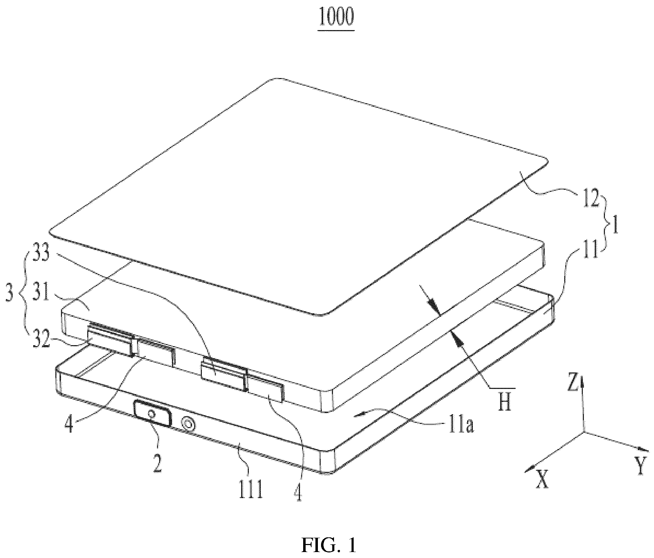

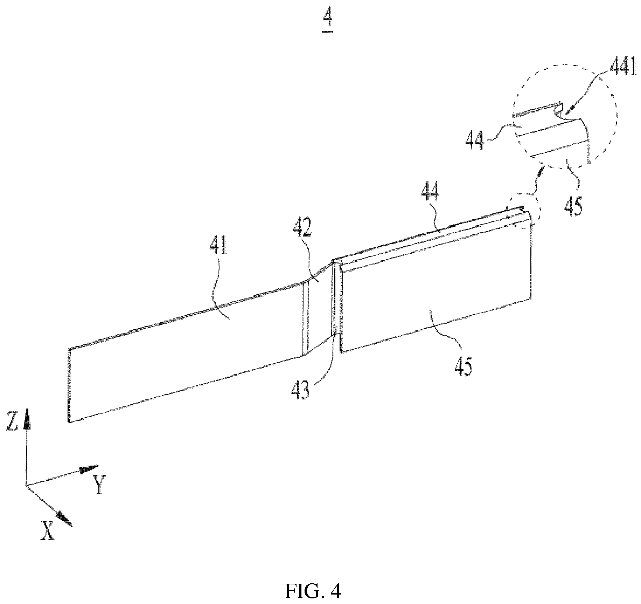

Referring to FIG. 1 to FIG. 4, a battery 1000 of an embodiment of this application includes a housing 1, a battery post 2, a battery cell 3, and an adapter 4. The housing 1 includes a first side plate 111. The battery post 2 is mounted to the first side plate 111. The battery cell 3 is accommodated in the housing 1. The battery cell 3 includes a battery cell body 31 and a first tab 32, where the first tab 32 extends from an end of the battery cell body 31 facing the first side plate 111.

The battery 1000 of this embodiment of this application may be a lithium-ion battery, a sodium-lithium-ion battery, a sodium-ion battery, a magnesium-ion battery, or other types of batteries. This is not limited in some embodiment of this application.

The battery cell 3 may be a wound battery cell, a laminated battery cell, or other types of battery cells.

The housing 1 has an accommodating cavity inside, and the accommodating cavity may be configured to accommodate the battery cell 3, an electrolyte, and other components.

The housing 1 may be of various shapes. For example, the housing may be cylindrical or rectangular. For example, if the battery cell 3 is a cylindrical structure, a cylindrical housing may be selected; and if the battery cell 3 is a rectangular structure, a rectangular housing may be selected.

The housing 1 may be made of various materials, such as copper, iron, aluminum, stainless steel, aluminum alloy, and plastic. This is not particularly limited in some embodiments of this application.

The battery cell 3 includes a first electrode plate, a second electrode plate, and a separator, where one of the first electrode plate and the second electrode plate is a positive electrode plate, the other of the first electrode plate and the second electrode plate is a negative electrode plate, and the separator insulates the first electrode plate from the second electrode plate. The battery cell 3 works mainly relying on the movement of metal ions between the first electrode plate and the second electrode plate.

The first electrode plate includes a first coated region coated with an active substance layer and a first uncoated region coated with no active substance layer, and the second electrode plate may include a second coated region coated with an active substance layer and a second uncoated region coated with no active substance layer. The active substance layer may be determined based on the polarity of the electrode plate. For example, the active substance layer of the positive electrode plate may include lithium ternary, lithium manganate, lithium iron phosphate, or other active substances, and the active substance layer of the negative electrode plate may include graphite or silicon.

The battery cell body 31 may include a first coated region, a separator, and a second coated region, and the first tab 32 may include a first uncoated region.

For example, the battery cell 3 further includes a second tab 33, where the polarity of the second tab 33 is opposite to the polarity of the first tab 32. The second tab 33 may extend from an end of the battery cell body 31 facing the first side plate 111, or may extend from an end of the battery cell body 31 facing away from the first side plate 111. Optionally, the second tab 33 includes a second uncoated region.

The battery post 2 is electrically connected to the battery cell 3. For example, the battery post 2 may be electrically connected to the first tab 32 or electrically connected to the second tab 33.

The battery post 2 may be exposed to the outside of the battery 1000 and serve as an output electrode of the battery 1000. The battery post 2 may electrically connect the battery cell 3 to an external circuit for charging and discharging the battery cell 3.

The adapter 4 may be configured to connect the battery cell 3 to an output electrode of the battery 1000.

In some embodiments, the battery 1000 may have a first side plate 111 and a battery post 2 as two output electrodes. In this case, one of the first side plate 111 and the battery post 2 is electrically connected to the first tab 32 via one adapter 4, and the other of the first side plate 111 and the battery post 2 is electrically connected to the second tab 33 via another adapter 4. In some other embodiments, the battery 1000 may be provided with two battery posts 2 and use the two battery posts 2 as two output electrodes. In this case, one battery post 2 is electrically connected to the first tab 32 via one adapter 4 and the other battery post 2 is electrically connected to the second tab 33 via another adapter 4.

The following first describes the adapter 4 of the battery in some embodiments of this application in detail.

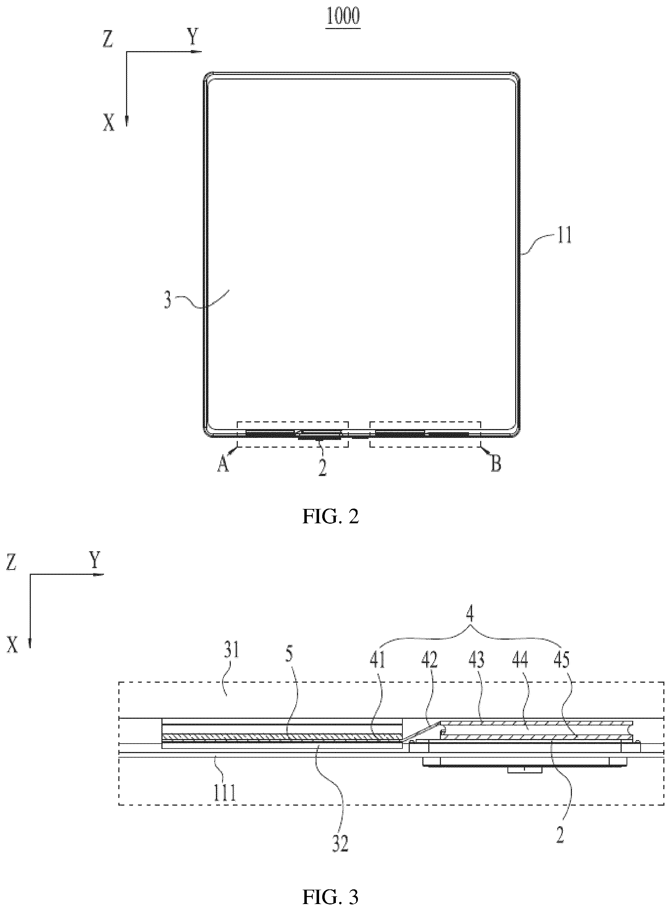

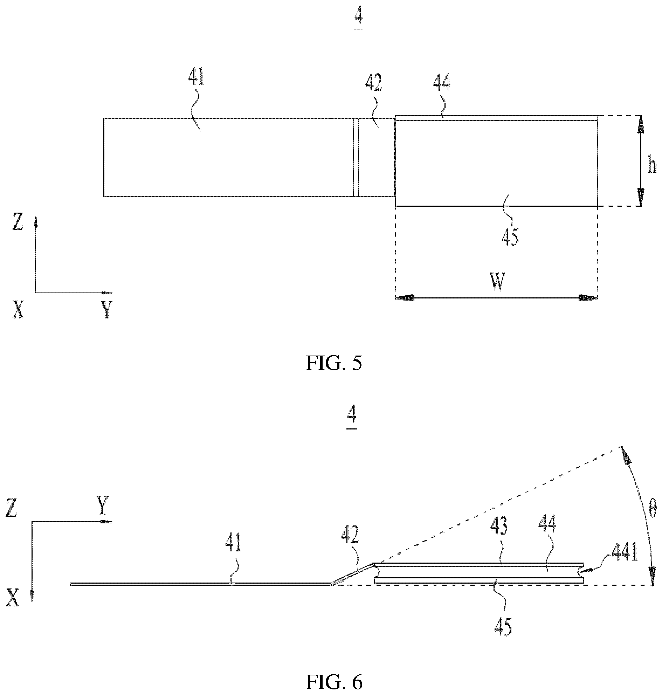

Referring to FIG. 3 to FIG. 7, in some embodiments, the adapter 4 includes a first connecting portion 41, a first bending portion 42, a second connecting portion 43, a second bending portion 44, and a third connecting portion 45. The first connecting portion 41 is connected to the first tab 32, and the first bending portion 42 connects the first connecting portion 41 and the second connecting portion 43. A projection of the first connecting portion 41 on the first side plate 111 does not overlap with a projection of the second connecting portion 43 on the first side plate 111, and the first connecting portion 41 is closer to the first side plate 111 than the second connecting portion 43. The third connecting portion 45 is located between the second connecting portion 43 and the first side plate 111, the second bending portion 44 connects the second connecting portion 43 and the third connecting portion 45, and the third connecting portion 45 is connected to the first side plate 111 or to the battery post 2.

The first tab 32 may be electrically connected either to the first side plate 111 or to the battery post 2 via the adapter 4.

The first bending portion 42 is bent with respect to both the first connecting portion 41 and the second connecting portion 43, and the second bending portion 44 is bent with respect to both the second connecting portion 43 and the third connecting portion 45.

Under the condition that the battery 1000 is subjected to an external shock, the battery cell 3 may be shaken inside the housing 1, which causes a joint between the first connecting portion 41 and the first tab 32 and a joint between the third connecting portion 45 and the battery post 2 (or a joint between the third connecting portion 45 and the first side plate 111) to be pulled. The first bending portion 42 and the second bending portion 44 may release stress through deformation, thereby providing buffering, reducing the stress at the joint between the first connecting portion 41 and the first tab 32 and the joint between the third connecting portion 45 and the battery post 2, reducing the risk of failure of the joint between the first connecting portion 41 and the first tab 32 and the joint between the third connecting portion 45 and the battery post 2, and improving the safety of the battery 1000. The first connecting portion 41 is bent toward the first side plate 111 with respect to the second connecting portion 43 to reduce a distance between the first connecting portion 41 and the first side plate 111 and to provide more folding space for the first tab 32, improving the utilization of the internal space of the battery 1000 and the energy density of the battery 1000.

In some embodiments, the housing 1 is a rectangular structure and the first side plate 111 is in the form of a flat plate.

In some embodiments, the battery post 2 runs through the first side plate 111 and is riveted to the first side plate 111.

In some embodiments, the battery post 2 is insulated from the first side plate 111.

In some embodiments, the projection of the first tab 32 on the first side plate 111 does not overlap with the projection of the second connecting portion 43 on the first side plate 111, which reduces the risk of the second connecting portion 43 interfering with the joint between the first tab 32 and the first connecting portion 41.

In some embodiments, the first tab 32 is welded to the first connecting portion 41.

In some embodiments, the third connecting portion 45 is connected to the battery post 2. A surface of the first connecting portion 41 facing the first side plate 111 is closer to the first side plate 111 than a surface of the third connecting portion 45 facing the first side plate 111. Based on some embodiments of this application, the distance between the first connecting portion 41 and the first side plate 111 can further reduced and more folding space for the first tab 32 can be provided.

The battery post 2 is located on a side of the third connecting portion 45 facing away from the second connecting portion 43. Optionally, the third connecting portion 45 is welded to the battery post 2.

In some embodiments, the first connecting portion 41, the second connecting portion 43, and the third connecting portion 45 are all flat plate structures. Correspondingly, the surface of the first connecting portion 41 facing the first side plate 111 and the surface of the third connecting portion 45 facing the first side plate 111 are both planar.

In some embodiments, the first connecting portion 41, the second connecting portion 43, and the third connecting portion 45 are parallel.

In some embodiments, the first bending portion 42 is a flat plate structure.

In some embodiments, the second bending portion 44 is bent in a curved shape.

In some embodiments, the first tab 32 is a tab of positive polarity. The battery post 2 is a positive output electrode of the battery 1000. Optionally, the first side plate 111 is electrically connected to the second tab 33 of negative polarity, to be specific, the first side plate 111 may be the negative output electrode of the battery 1000.

In some embodiments, a portion of the first tab 32 is disposed between the first connecting portion 41 and the first side plate 111 and is connected to the first connecting portion 41.

The first tab 32 may utilize the space between the first connecting portion 41 and the first side plate 111, so as to further increase the space utilization and improve the energy density of the battery. The first connecting portion 41 may support the first tab 32, reducing the risk of tearing the first tab 32 under the condition that the battery 1000 is subjected to an external shock, and improving the cycle life of the battery.

The battery cell body 31 and the first side plate 111 are arranged along a first direction X. A head end of the first tab 32 may be bent to reduce the space occupied by the first tab 32 in the first direction X and to improve space utilization.

An insulating strip 5 is affixed to a surface of the first connecting portion 41 facing the battery cell body 31. The insulating strip 5 may insulate and isolate the first connecting portion 41 from the battery cell body 31, so as to reduce the possibility of the first connecting portion 41 being in contact with the battery cell body 31 under the condition that the battery 1000 is subjected to an external shock, to reduce the risk of the first connecting portion 41 connecting the positive and negative electrodes of the battery cell body 31, and to improve safety.

In some embodiments, the insulating strip 5 may be made of PET.

In some embodiments, the first connecting portion 41 is welded to the first tab 32 and forms a weld mark. The insulating strip 5 covers the weld mark. The insulating strip 5 can fix metal particles remaining on the weld mark, reducing the risk of metal particles falling into the battery cell body 31 and improving safety. As recesses of the weld mark are uneven, the insulating strip 5 can also reduce the risk of the weld mark scratching other components (for example, the first tab 32 and the battery cell body 31).

In some embodiments, an insulating strip (not shown) is also affixed to a portion of the first tab 32 disposed between the first connecting portion 41 and the first side plate 111. The insulating strip may insulate and isolate the first tab 32 from the first side plate 111, so as to reduce the risk of the first tab 32 connecting the first side plate 111.

In some embodiments, an insulating strip (not shown) is also affixed to a surface of the second connecting portion 43 facing the battery cell body 31.

In some embodiments, the second bending portion 44 is provided with a weakening structure 441. With the weakening structure 441 provided on the second bending portion 44, the strength of the second bending portion 44 can be reduced, making the second bending portion 44 easier to be bent to shape. Under the condition that the battery is subjected to an external impact, the second bending portion 44 is more likely to release stress through elastic deformation.

In some embodiments, the weakening structure 441 includes at least one of a hole, a slot, and a notch. Certainly, the weakening structure 441 may alternatively be other structures that can reduce the strength of the second bending portion 44.

In some embodiments, the weakening structure 441 includes two notches, where the two notches are opened at two ends of the second bending portion 44.

Referring to FIG. 1 to FIG. 7 together, in some embodiments, the battery cell body 31 and the first side plate 111 are arranged along a first direction X, and the projection of the first connecting portion 41 on the first side plate 111 and the projection of the second connecting portion 43 on the first side plate 111 are arranged along a second direction Y. The housing 1 includes a shell 11 and a cover plate 12, where the shell 11 has an opening 11a at an end in a third direction Z, and the shell 11 includes a first side plate 111, and the cover plate 12 is connected to the first side plate 111 and covers the opening 11a. The first direction X, the second direction Y, and the third direction Z intersect each other. For example, the cover plate 12 may be attached to the shell 11 through welding, bonding, or other means.

In some embodiments, the first direction X, the second direction Y, and the third direction Z are perpendicular to each other.

In some embodiments, the shell 11 includes four side plates and a bottom plate, where the four side plates enclose an opening 11a, and the bottom plate is attached to the four side plates and opposite the opening 11a. For example, the first side plate 111 may be one of the four side plates.

In some embodiments, an area of the cover plate 12 is greater than an area of the first side plate 111. Optionally, an area of the cover plate 12 is greater than an area of any one of the four side plates.

In some embodiments of this application, the area of the opening 11a may be increased to facilitate the installation of components such as the battery cell 3 into the shell 11, thereby improving space utilization.

In some embodiments, the second bending portion 44 connects an end of the second connecting portion 43 close to the cover plate 12 and an end of the third connecting portion 45 close to the cover plate 12.

For example, the battery 1000 may be assembled according to the following steps.

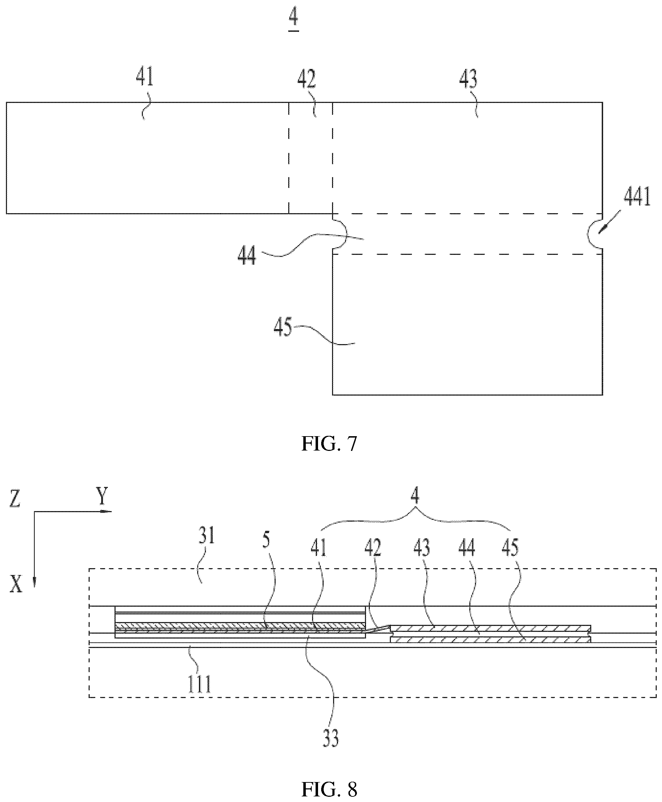

Step S1: Provide an L-shaped adapter strip 4, as shown in FIG. 7.

Step S2: Weld the first tab 32 of the battery cell 3 to the first connecting portion 41 of the adapter strip 4.

Step S3: Bend the adapter strip 4 to form the first bending portion 42.

Step S4: Insert the third connecting portion 45 of the adapter strip 4 into the shell 11 through the opening 11a, and weld the third connecting portion 45 and the battery post 2.

Step S5: Bend the adapter strip 4 again and place the battery cell 3 into the shell 11 via the opening 11a, where the adapter strip 4 forms the second bending portion 44 after bending.

Step S6: Connect the shell 11 and the cover plate 12 such that the cover plate 12 covers the opening 11a.

In assembling the battery based on the method described above, it is not necessary to perform the steps described above in sequence, to be specific, the steps may be performed in the order mentioned in the foregoing embodiments, or the steps may be performed in a different order from the order mentioned in the foregoing embodiments, or several steps may be performed simultaneously. For example, step S3 may be performed before step S2 or after step S2.

The second bending portion 44 may be bent to shape after the third connecting portion 45 is connected to the battery post 2, which may simplify the battery assembly process.

In some embodiments, in the third direction Z, a size of the battery cell 3 is H, a maximum size of the adapter 4 is h, and h and H satisfy 1 mm≤h≤H-0.3 mm.

The value of h is positively related to the current flow capability of the adapter 4. If h is too small, it is easy to cause the adapter 4 to have insufficient current flow capability, and the adapter 4 generates more heat during charging and discharging, which affects the cycling performance of the battery. A larger h indicates a more space occupied by the adapter 4 in the third direction Z and a higher risk of interference between the adapter 4 and the cover plate 12.

The inventors have found from extensive research and tests that with the value of h being limited to the range of 1 mm≤h≤H-0.3 mm, the current flow capability of the adapter 4 can be improved and the risk of interference between the adapter 4 and the cover plate 12 can be reduced.

In some embodiments, the first bending portion 42 is bent toward the battery cell body 31 with respect to the first connecting portion 41, and an angle at which the first bending portion 42 is bent with respect to the first connecting portion 41 is θ, where 0°<θ≤45°.

Under the premise that a size of the first bending portion 42 in the second direction Y is specified, a larger θ makes a smaller distance between the first connecting portion 41 and the first side plate 111. If θ is too large, it causes the distance between the first connecting portion 41 and the first side plate 111 to be too small, causing the risk of contact and connection between the first connecting portion 41 and the first side plate 111.

In view of this, the inventors have found from extensive research and tests that with θ being limited to 0°<θ≤45°, the risks of contact and connection between the first connecting portion 41 and the first side plate 111 can be reduced.

Optionally, θ is 5°, 15°, 25°, 35°, or 45°.

In some embodiments, in the second direction Y, the third connecting portion 45 has a size W greater than or equal to 1 mm to increase the current flow capability of the third connecting portion 45.

In some embodiments, the battery 1000 is a cuboid structure. The first direction X is a length direction of the battery 1000, the second direction Y is a width direction of the battery 1000, and the third direction Z is a thickness direction of the battery 1000.

In some embodiments, as shown in FIG. 8, in some embodiments, the second tab 33 is electrically connected to the first side plate 111 via another adapter strip 4. Optionally, the adapter strip 4 connecting the second tab 33 to the first side plate 111 may be of the same structure as the adapter strip 4 connecting the first tab 32 to the battery post 2.

Specifically, for the adapter strip 4 connecting the second tab 33 and the first side plate 111, the first connecting portion 41 is connected to the second tab 33, and the third connecting portion 45 is connected to the first side plate 111.

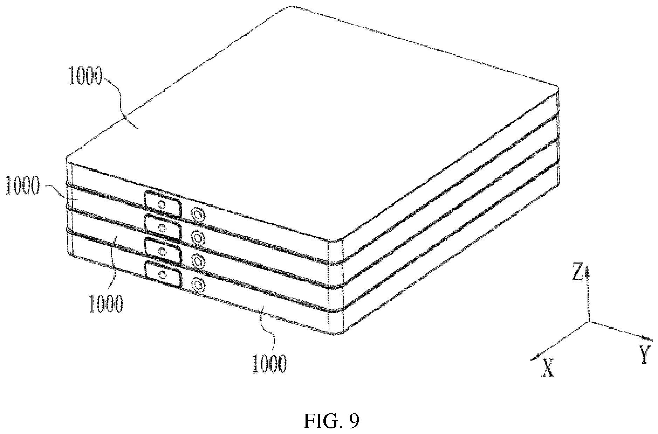

As shown in FIG. 9, some embodiments of this application further provide a battery pack, where the battery pack includes a plurality of batteries 1000. The batteries 1000 may be the batteries provided in any one of the foregoing embodiments.

In some embodiments, the plurality of batteries 1000 may be electrically connected in series, parallel, or series-parallel, where being connected in series-parallel means that the plurality of batteries 1000 are connected in both series and parallel.

In some embodiments, the battery pack further includes components such as a box and a circuit board. The box is configured to accommodate the plurality of batteries 1000, and the circuit board may be configured to monitor statuses of the plurality of batteries 1000.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A battery, comprising:
a housing comprising a first side plate;
a battery post mounted to the first side plate;
a battery cell accommodated in the housing, wherein the battery cell comprises a battery cell body and a first tab, and the first tab extends from an end of the battery cell body facing the first side plate; and
an adapter comprising a first connecting portion, a first bending portion, a second connecting portion, a second bending portion, and a third connecting portion, wherein the first connecting portion is connected to the first tab, the first bending portion connects the first connecting portion and the second connecting portion, a projection of the first connecting portion on the first side plate does not overlap with a projection of the second connecting portion on the first side plate, the third connecting portion is disposed between the second connecting portion and the first side plate, the second bending portion connects the second connecting portion and the third connecting portion, and the third connecting portion is connected to the first side plate or to the battery post.

2. The battery according to claim 1, wherein the third connecting portion is connected to the battery post; and
a surface of the first connecting portion facing the first side plate is closer to the first side plate than a surface of the third connecting portion facing the first side plate.

3. The battery according to claim 1, wherein a portion of the first tab is disposed between the first connecting portion and the first side plate and is connected to the first connecting portion.

4. The battery according to claim 3, wherein an insulating strip is affixed to a surface of the first connecting portion facing the battery cell body.

5. The battery according to claim 1, wherein the second bending portion is provided with a weakening structure.

6. The battery according to claim 5, wherein the weakening structure comprises at least one of a hole, a slot, and a notch.

7. The battery according to claim 1, wherein
the battery cell body and the first side plate are arranged along a first direction, and the projection of the first connecting portion on the first side plate and the projection of the second connecting portion on the first side plate are arranged along a second direction;
the housing comprises a shell and a cover plate, wherein the shell has an opening at one end in a third direction, and the cover plate is connected to the first side plate and covers the opening; and
the first direction, the second direction, and the third direction are perpendicular to each other.

8. The battery according to claim 7, wherein the second bending portion connects an end of the second connecting portion close to the cover plate and an end of the third connecting portion close to the cover plate.

9. The battery according to claim 7, wherein in the third direction, a size of the battery cell is H, a maximum size of the adapter is h, and h and H satisfy 1 mm≤h≤H-0.3 mm.

10. The battery according to claim 1, wherein the first bending portion is bent toward the battery cell body with respect to the first connecting portion, and an angle at which the first bending portion is bent with respect to the first connecting portion is θ, wherein 0°<θ≤45°.

11. A battery pack, comprising a plurality of batteries according to any one of claims 1 to 10.
